# EUROPEAN PATENT APPLICATION

(11) **EP 1 939 138 A1**
(43) Date of publication of application: **02.07.2008**
(21) Application number: 06125694.7
(22) Date of filing: 08.12.2006
(51) Int. Cl.: C01B 3/52

(54) **A process of increasing the hydrogen/carbon monoxide molar ratio in a synthesis gas**

(71) Applicant: SHELL INTERNATIONALE RESEARCH MAATSCHAPPIJ B.V., 2596 HR Den Haag (NL)
(72) Inventor: Zander, Jan Volkert, NL-1031 CM Amsterdam (NL)
(74) Representative: Peereboom, Jan Hendrik Pieter Jacob

(57) **Abstract**

The invention is directed to a process of increasing the hydrogen/carbon monoxide (H₂/CO) molar ratio in a synthesis gas comprising halogen compounds, hydrogen and carbon monoxide and having a temperature of above 300 °C. The process involves the following steps:
(a) cooling the synthesis gas to a temperature below 270 °C by indirect heat exchange against a cooling medium,
(b) performing a water scrubbing step to remove the halogen compounds from the synthesis gas as obtained in step (a) by contacting the synthesis gas with water,
(c) contacting between 20 and 80 mol% of the scrubbed synthesis gas as obtained in step (b) with water having a temperature of below the saturation temperature of water in order to increase the water content in the synthesis gas,
(d) performing a water gas shift reaction wherein part of the carbon monoxide is converted together with steam to carbon dioxide and hydrogen.

## Description

The present invention is related to a process of increasing the hydrogen/carbon monoxide (H₂/CO) molar ratio in a synthesis gas comprising halogen compounds, hydrogen and carbon monoxide and having a temperature of above 300 °C.

Patent publication WO-A-2006/070018 describes a process wherein a synthesis gas having a hydrogen/carbon monoxide (H₂/CO) molar ratio of below 1 is obtained by partial oxidation of a solid carbonaceous feed, such as coal. The hydrogen/carbon monoxide (H_{2/}CO) molar ratio is increased by dividing the synthesis gas into at least two sub-streams, wherein one sub-stream undergoes a catalytic water shift conversion reaction, and wherein the so-obtained converted sub-stream is combined with the non-converted sub-stream to form a synthesis gas having an increased H₂/CO ratio of between 1.4 and 1.95.

A disadvantage of the above process is that significant amounts of steam are required to be added to the feed of the water shift conversion reaction in order to perform the below reaction:

CO + H₂O → H₂ + CO₂

This steam has to be prepared in for example dedicated boilers which incurs additional complexity to the process.

The object of the present invention is to provide a process wherein less steam is required to be added to a feed of a water shift conversion.

This object is achieved with the following process. A process of increasing the hydrogen/carbon monoxide (H₂/CO) molar ratio in a synthesis gas comprising halogen compounds, hydrogen and carbon monoxide and having a temperature of above 300 °C by performing the following steps:
(a) cooling the synthesis gas to a temperature below 27 °C by indirect heat exchange against a cooling medium,
(b) performing a water scrubbing step to remove the halogen compounds from the synthesis gas as obtained in step (a) by contacting the synthesis gas with liquid water,
(c) contacting between 20 and 80 mol% of the scrubbed synthesis gas as obtained in step (b) with liquid water having a temperature of below the saturation temperature of water in order to increase the water content in the synthesis gas,
(d) performing a water gas shift reaction wherein part of the carbon monoxide is converted together with steam to carbon dioxide and hydrogen.

Applicants found that by performing a step (c) on only part of the scrubbed synthesis gas a synthesis gas is obtained having a high steam content. The higher steam content in this stream is advantageous because now less additional steam is required to be added prior to performing the water gas shift reaction in step (d). The part of the scrubbed synthesis gas that is not subjected to step (c) now contains less steam, which makes this gas more suited to be treated in optional downstream gas treatment steps.

The synthesis gas comprising halogen compounds, hydrogen and carbon monoxide and having a temperature of above 300 °C is suitably obtained in a gasification process of a carbonaceous feed. The carbonaceous feed is preferably a solid carbonaceous feed, more preferably coal, or a heavy oil residue. Suitable solid coal carbonaceous feeds are anthracite, bitumous coal, sub-bitumous coal and lignite. Other solid carbonaceous feeds are petroleum coke and peat. Suitable heavy oil residues hydrocarbons extracted from tar sands, residues from refineries such as residual oil fractions boiling above 360°C, especially above 550°C, more especially above 750°C, directly derived from crude oil, or from oil conversion processes such as thermal cracking, catalytic cracking or hydrocracking.

Gasification of a carbonaceous feeds such as coal is well known, and generally involves milling or otherwise grinding the feed to a preferred size or size range, followed by heating the feed with oxygen in a gasifier. This creates the mixture of hydrogen and carbon monoxide referred to as synthesis gas. However, the proportion of carbon and hydrogen in the preferred carbonaceous feeds is generally such that the hydrogen/carbon monoxide (H₂/CO) molar ratio in the synthesis gas formed is generally less than 1. Many processes, such as the Fischer-Tropsch process based on cobalt-catalysts, generally desire a higher H₂/CO molar ratio in the synthesis gas.

In a gasification process the synthesis gas will be discharged at a high temperature. Typically this hot synthesis gas is cooled to a temperature of between 300 and 400 °C. Cooling may be performed by direct contacting with water or by indirect heat exchange against evaporating water in a so-called waste heat boiler. Any solids still present in the partly cooled synthesis gas is preferably separated by means of a so-called dry-solids removal step, e.g. a cyclone or by means of filter candles. The resulting synthesis gas having a temperature of above 300 °C, preferably above 320 °C and preferably below 400 °C is used as the synthesis gas feed of the process according to the present invention.

An example of a gasification processes which can prepare a synthesis gas suitable to be used as feed in the present process is described in WO-A-2006117355.

In step (a) the synthesis gas is cooled to a temperature below 270 °C by indirect heat exchange against a cooling medium. This step may be performed in well known heat exchange apparatuses. Preferably the gas is cooled to a temperature above 200 °C, more preferably above 210 °C. The cooling medium is preferably water and wherein the cooling results in used cooling water. More preferably the used water is used in step (c) to increase the water content in the synthesis gas.

In step (b) a water scrubbing step is performed to remove the halogen compounds as present in the synthesis gas. In this step the gas is scrubbed with liquid water having a temperature such that suitably light condensing conditions are obtained during contacting. With light condensing conditions is meant that steam as present in the synthesis gas feed to step (b) condenses to liquid water. Preferably the liquid water as used in step (b) has a temperature of below 150 °C.

After the scrubbing step between 20 and 80 mol% and preferably at most 60 mol% of the scrubbed synthesis gas as obtained in step (b) is subjected to step (c).

The part of the scrubbed gas which is used in step (c) is preferably increased in temperature by means of indirect heat exchange of the scrubbed gas and the synthesis gas as supplied to the scrubber.

In step (c) the scrubbed synthesis gas is contacted with liquid water having a temperature of below the saturation temperature of water in order to increase the water content in the synthesis gas. The saturation temperature of water will depend on the pressure at which step (c) is performed. This pressure may range from 2 to 15 Mpa, preferably from 3 to 9 Mpa.

Steam is preferably added to the synthesis gas as obtained in step (c) in case the water content is insufficient to perform the water gas shift reaction in step (d). The object of the present invention is to minimize the amount of this added steam, although in may embodiments of the present invention some addition of steam may be nevertheless required. The molar ratio of steam to carbon monoxide in the synthesis gas as used as feed to step (d) is preferably between 1.5:1 and 3:1 and more preferably about 2.8:1.

In step (d) a water gas shift reaction is performed wherein part of the carbon monoxide is converted together with water to carbon dioxide and hydrogen. The water shift reaction is well known in the art. Generally, water is mixed with the synthesis gas to form carbon dioxide and hydrogen. The catalyst used can be any of the known catalysts for such a reaction, including iron, chromium, copper and zinc. Copper on zinc oxide is a known shift catalyst.

Preferably the water gas shift reaction is performed in at least two packed bed reactors in series. The inlet temperature of the gas for each reactor is preferably between 250 and 300 °C. The reaction is exothermal and the temperature of the shifted gas after each reactor is preferably between 270 and 480 °C. This heat released in each reactor is preferably recovered by cooling the shifted gas with water. The used liquid water is preferably used in step (c) to increase the water content in the synthesis gas.

The shifted synthesis gas is preferably passed through a carbon dioxide/hydrogen sulphide (CO₂/H₂S) removal system thereby obtaining a clean and shifted synthesis gas. The synthesis gas is preferably cooled to a temperature of below 60 °C before being subjected to such a cleaning step. Cooling is preferably achieved by direct contacting this gas with liquid water. A very suitable source for this liquid water is the product water produced in a possible downstream Fischer-Tropsch reaction. The water will be recovered as liquid water having a temperature of preferably above 120 °C in this cooling step. Preferably this liquid water is further increased in temperature by indirect heat exchange with the shifted synthesis gas as prepared in the shift reactor(s)

The CO₂/H₂S removal system preferably uses a physical solvent process, especially methanol or sulfolan, preferably methanol. This process is based on carbon dioxide and hydrogen sulphide being highly soluble under pressure in the solvent, and then being readily releasable from solution when the pressure is reduced as further discussed below.

It is preferred to remove at least 80 vol%, preferably at least 90 vol%, more preferably at least 95 vol% and at most 99.5 vol%, of the carbon dioxide present in the catalytically shifted synthesis gas stream.

On an industrial scale there are chiefly two categories of absorbent solvents, depending on the mechanism to absorb the acidic components: chemical solvents and physical solvents. Each solvent has its own advantages and disadvantages as to features as loading capacity, kinetics, regenerability, selectivity, stability, corrosivity, heat/cooling requirements etc.

Chemical solvents which have proved to be industrially useful are primary, secondary and/or tertiary amines derived alkanolamines. The most frequently used amines are derived from ethanolamine, especially monoethanol amine (MEA), diethanolamine (DEA), triethanolamine (TEA), diisopropanolamine (DIPA) and methyldiethanolamine (MDEA).

Physical solvents which have proved to be industrially suitable are cyclo-tetramethylenesulfone and its derivatives, aliphatic acid amides, N-methylpyrrolidone, N-alkylated pyrrolidones and the corresponding piperidones, methanol, ethanol and mixtures of dialkylethers of polyethylene glycols.

A well-known commercial process uses an aqueous mixture of a chemical solvent, especially DIPA and/or MDEA, and a physical solvent, especially cyclotetramethylene-sulfone. Such systems show good absorption capacity and good selectivity against moderate investment costs and operational costs. They perform very well at high pressures, especially between 20 and 90 bara.

The physical adsorption process useable in the present invention is well known to the man skilled in the art. Reference can be made to e.g. Perry, Chemical Engineerings' Handbook, Chapter 14, Gas Absorption. The absorption process useable in the present process is a physical process. Suitable solvents are well known to the man skilled in the art and are described in the literature. In the present process the liquid absorbent in the physical absorption process is suitably methanol, ethanol, acetone, dimethyl ether, methyl i-propyl ether, polyethylene glycol or xylene, preferably methanol. The physical absorption process is suitably carried out at low temperatures, preferably between -60 °C and 0 °C, preferably between -30 and -10 °C.

The physical absorption process is carried out by contacting the light products stream in a counter-current upward flow with the liquid absorbent. The absorption process is preferably carried out in a continuous mode, in which the liquid absorbent is regenerated. This regeneration process is well known to the man skilled in the art. The loaded liquid absorbent is suitably regenerated by pressure release (e.g. a flashing operation) and/or temperature increase (e.g. a distillation process). The regeneration is suitably carried out in two or more steps, preferably 3-10 steps, especially a combination of one or more flashing steps and a distillation step.

The regeneration of solvent from the process is also known in the art. Preferably, the present invention involves one integrated solvent regeneration tower.

The present invention may also involve one or more further removal systems, guards or scrubbing units, either as back-up or support to the CO₂/H₂S removal system, or to assist in the reduction and/or removal of other contaminants such as HCN, NH₃, COS and H₂S, metals, carbonyls, hydrides or other trace contaminants.

Preferably part or all of the remaining scrubbed synthesis gas as obtained in step (b) is passed through a carbon dioxide/hydrogen sulphide removal system thereby obtaining a clean, and non-shifted, synthesis gas. Preferably this carbon dioxide/hydrogen sulphide removal system is a separate system from the system, which generates the clean and shifted synthesis gas. The clean and shifted synthesis gas and the clean synthesis gas is preferably mixed resulting in a final synthesis gas. More preferably the ratio of scrubbed synthesis gas which is used to prepare clean and shifted synthesis gas and the scrubbed synthesis gas which is used to prepare clean synthesis gas is chosen such to arrive at a H₂/CO molar ratio of between 1.4 and 1.95 for the final synthesis gas. The final synthesis gas is preferably used as feed to a Fischer-Tropsch process and wherein the Fischer-Tropsch process yields a hydrocarbon product.

The process according to the invention may also be suitably used to prepare a synthesis gas having a hydrogen over carbon monoxide molar ratio of greater than 1.8, preferably between 1.9 and 2.2. This molar ratio is suited when intending to prepare methanol or dimethyl ether (DME) or their mixtures. Methanol may find in turn advantageous uses, such as feedstock to prepare DME. Other interesting application is the methanol to prepare a synthetic gasoline or to prepare olefins as in the known methanol to olefin process (MTO). DME itself may also find use as feedstock to prepare lower olefins, like ethylene, propylene and butylenes.

Hydrogen may also be prepared as a by-product from the clean and shifted synthesis gas as obtained. Hydrogen may be isolated from said gas by means of pressure swing absorption (PSA), membrane separation or combinations of said processes. Hydrogen may find suitable use in hydroprocessing processes to upgrade the hydrocarbon products of a Fischer-Tropsch synthesis to valuable end products like wax, naphtha, kerosene, gas oil and lubricating base oils.

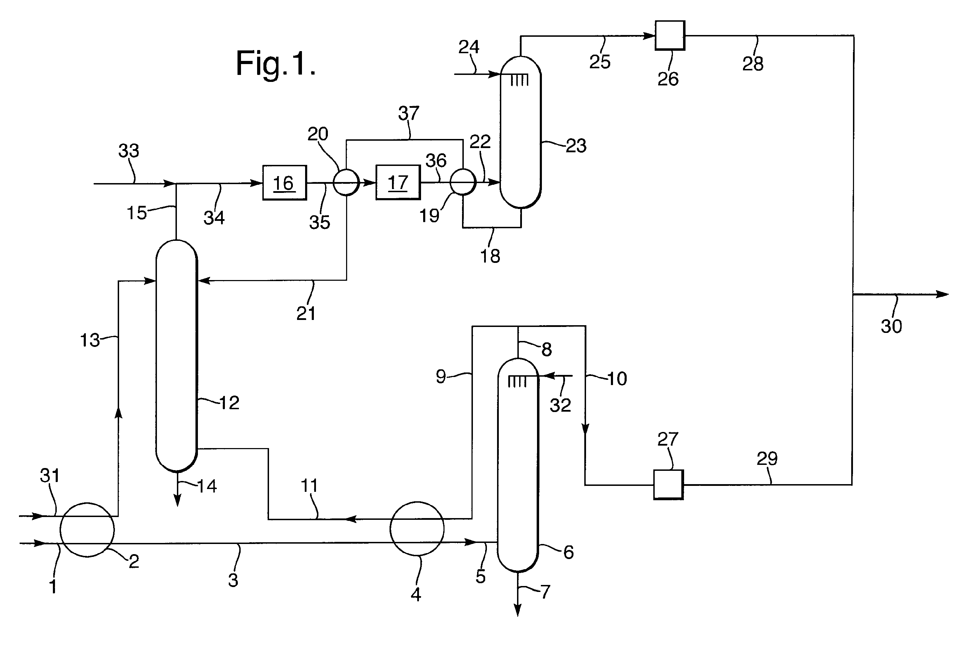

The invention will be illustrated with the following Figure 1. For the purpose of this description, a single reference number will be assigned to a line as well as a stream carried in that line. Same reference numbers refer to similar structural elements.

Figure 1 illustrates the process according to the present invention. A synthesis gas (1) comprising halogen compounds, hydrogen and carbon monoxide and having a temperature of above 300 °C is cooled in heat exchanger (2) against liquid water (31) resulting in used cooling water (13) and partly cooled synthesis gas (3). This partly cooled synthesis gas (3) is further cooled in heat exchanger (4) against part of the scrubbed synthesis gas (9) to obtain a cooled synthesis gas (5). The cooled synthesis gas (5) is fed to a water scrubbing step in scrubbing tower (6). To said tower (6) liquid water (32) is added and used water is discharged via (7). The scrubbed synthesis gas (8) is divided in one part scrubbed synthesis gas (9) and another part scrubbed synthesis gas (10). Scrubbed synthesis gas (10) is further cooled and subjected to a carbon dioxide/hydrogen sulphide removal system in combination with one or more guard beds or scrubbing units, all illustrated as (27), for removal of other contaminants such as HCN, NH₃, COS metals, carbonyls, hydrides or other trace contaminants. The synthesis gas as obtained in such cleaning steps is clean synthesis gas (29).

In temperature increased scrubbed synthesis gas (11) is fed to the lower part of a wetting tower (12). In wetting tower (12) step (c) is performed by contacting the scrubbed gas (11) with liquid water (21) and used liquid cooling water (13). Water, which has not evaporated to steam in tower (12), is discharged as liquid water (14). A synthesis gas (15) having a higher water content than the water content in the scrubbed synthesis gas (11) is obtained in this step (c). To said synthesis gas (15) additional steam (33) is added to obtain a synthesis gas (34) having a desired water content for use as feed to water shift reactor (16). The partly shifted synthesis gas (35) is cooled in heat exchanger (20) against liquid water (37) before being fed to a second water shift reactor (17). The shifted synthesis gas (36) is also cooled against water (18) in heat exchanger (19), resulting in water (37) having a higher temperature. The partly cooled and shifted synthesis gas (22) is further cooled in cooling tower (23) by direct contacting with liquid water (24). The water as discharged from said unit is liquid water (18) as used to cool the shifted synthesis gas in heat exchanger (19).

The cooled and shifted synthesis gas (25) is further subjected to a carbon dioxide/hydrogen sulphide removal system in combination with one or more guard beds or scrubbing units, all illustrated as (26), for removal of other contaminants such as HCN, NH₃, COS metals, carbonyls, hydrides or other trace contaminants. The synthesis gas as obtained in such cleaning steps is clean and shifted synthesis gas (28). Clean and shifted synthesis gas (28) is combined with clean synthesis gas (29) to obtain final synthesis gas (30) having the desired hydrogen to carbon monoxide molar ratio.

Further integration of the different water flows is possible. Suitable water (14) is recycled and used as part of liquid water (24), used as scrubbing water (32) and/or used as liquid water (31).

## Claims

1. A process of increasing the hydrogen/carbon monoxide (H₂/CO) molar ratio in a synthesis gas comprising halogen compounds, hydrogen and carbon monoxide and having a temperature of above 300 °C by performing the following steps:
(a) cooling the synthesis gas to a temperature below 270 °C by indirect heat exchange against a cooling medium,
(b) performing a water scrubbing step to remove the halogen compounds from the synthesis gas as obtained in step (a) by contacting the synthesis gas with water,
(c) contacting between 20 and 80 mol% of the scrubbed synthesis gas as obtained in step (b) with liquid water having a temperature of below the saturation temperature of water in order to increase the water content in the synthesis gas,
(d) performing a water gas shift reaction wherein part of the carbon monoxide is converted together with steam to carbon dioxide and hydrogen.

2. Process according to claim 1, wherein the cooling medium as used in step (a) is water and wherein said cooling results in an used cooling water and wherein the used water is used as the water in step (c).

3. Process according to any one of claims 1-2, wherein the H₂/CO molar ratio in the feed-derived synthesis gas stream is less than 1.

4. Process according to any one of claims 1-3, wherein the synthesis gas as obtained in step (d) is passed through a carbon dioxide/hydrogen sulphide removal system thereby obtaining a clean and shifted synthesis gas.

5. Process according to claim 4, wherein part or all of the remaining scrubbed synthesis gas as obtained in step (b) is passed through a carbon dioxide/hydrogen sulphide removal system thereby obtaining a clean (and non-shifted) synthesis gas.

6. Process according to any one of claims 4-5, wherein the carbon dioxide/hydrogen sulphide removal system is a physical solvent process, wherein the solvent is methanol.

7. Process according to any one of claims 4-6, wherein the clean and shifted synthesis gas and the clean synthesis gas is mixed resulting in a final synthesis gas.

8. Process according to claim 7, wherein the ratio of scrubbed synthesis gas which is used to prepare clean and shifted synthesis gas and the scrubbed synthesis gas which is used to prepare clean synthesis gas is chosen such to arrive at a H₂/CO molar ratio of between 1.4 and 1.95 for the final synthesis gas.

9. Process according to claim 8, wherein the final synthesis gas is used as feed to a Fischer-Tropsch process and wherein the Fischer-Tropsch process yields a hydrocarbon product.
